# EUROPEAN PATENT SPECIFICATION

(11) **EP 0 466 331 B1**
(45) Date of publication and mention of the grant of the patent: **05.03.1997**
(21) Application number: 91305201.5
(22) Date of filing: 10.06.1991
(51) Int. Cl.: H04N 5/14

(54) **Motion image difference detecting apparatus**
Vorrichtung zur Detektion von Unterschieden zwischen Bewegtbildern
Dispositif de détection de la différence d'image de mouvement

(30) Priority: 09.07.1990 JP 179674/90
(43) Date of publication of application: 15.01.1992
(73) Proprietor: SONY CORPORATION, Tokyo 141 (JP)
(72) Inventor: Kawai, Toshihiko, c/o Patents Division, Sony Corp., Toky 141 (JP)
(74) Representative: Cotter, Ivan John

(56) References cited:
- EP-A- 0 169 709
- US-A- 4 797 740
- IEEE TRANSACTIONS ON CIRCUITS AND SYSTEMS vol. 6, no. 10, October 1989, NEW YORK US pages 1259 - 1265 TAMITANI ET AL. 'A Real-Time Video Signal Processor Suitable for Motion Picture Coding Applications'
- IEEE TRANSACTIONS ON CIRCUITS AND SYSTEMS FOR VIDEO TECHNOLOGY vol. 1, no. 1, March 1991, NEW YORK US pages 35 - 41 TAMITANI ET AL. 'A Real-Time HDTV Signal Processor : HD-VSP'
- IEEE/IEICE GLOBAL TELECOMMUNICATIONS CONFERENCE 1987, 15-18 NOVEMBER 1987, TOKYO, JAPAN. vol. 1/3, pages 60 - 64 RUSSEL HSING 'Motion Detection and Compensation Coding for Motion Video Coders : Technical Review and Comparison'
- PATENT ABSTRACTS OF JAPAN vol. 8, no. 157 (P-288)20 July 1984

## Description

This invention relates to motion image difference detecting apparatus.

With known teleconference systems, it is difficult to transmit all the required motion image signals within the time duration of a single frame, because there are too many such signals. However, if motion image signals are transmitted at intervals, or are subjected to a compression process such as by dropping some of the signals, the motion image quality and the responsiveness suffer. To overcome this problem, a number of high-efficiency coding methods have been proposed.

One proposed method which has proved effective is the motion compensating inter-frame coding method. This method involves detecting image motion between contiguous frames, and correcting the amount of motion using inter-frame prediction. What is critically important in this method is the detection of motion components within motion images (that is, images between which there is relative motion) accurately and efficiently. A number of variations of the method have been proposed to improve the capability to meet the above requirement.

One variation is the so-called block matching method which is known for its high accuracy in detecting motion components within motion images. This method involves dividing a picture area into a plurality of blocks and, on the assumption that a given motion is parallel to each of the blocks, detecting for each block a motion vector corresponding to the amount of motion shift which gives the best inter-frame correlation.

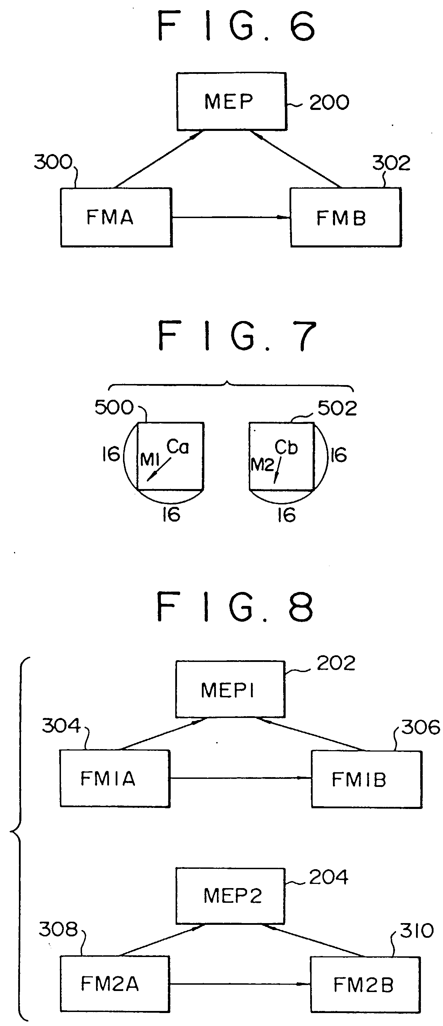

Figure 6 is a block diagram of a known motion vector detecting apparatus using a block matching method, and Figure 7 is a view showing how a motion vector is detected with this apparatus. In Figure 6, a frame memory (FMA) 300 stores the motion images of the currently scanned frame, for example, 288 x 352 pixels of motion image data. Each pixel may be represented as luminance data using eight bits. Another frame memory (FMB) 302 has the same capacity as the FMA 300 and stores the motion image data of the preceding frame. A motion vector detection processor (MEP) 200 successively compares the motion image data in the FMA 300 with those in the FMB 302, in units of a motion image detection unit block 500 (Figure 7) for the FMA 300, and a motion image detection unit block 502 for the FMB 302, thereby detecting the difference between the two sets of image data. That is, the MEP 200 compares image data M1 and M2 inside the 16 x 16 pixel unit blocks 500 and 502 around (above and below; left and right of) centres Ca and Cb at which the motion vector within the FMA 300 and the FMB 302 is to be detected. If any difference is detected between M1 and M2, that difference is expressed as a motion vector. The above operation is carried out on all pictures. The motion vector detected by the MEP 200 is coded before being transmitted to the receiving side. After the motion vector detection process, the motion image data stored in the FMA 300 are transmitted successively to the FMB 302.

In the above-described process which performs "full search" for image data of each picture, one picture may, for example, comprise 288 x 352 pixels, and the motion image detection unit block may be 16 x 16 pixels. In this case, processing each picture at say 30 Hz requires performing the motion vector detection process within 84 µs per unit block (of 256 pixels). That means there is the need for an MEP 200, an FMA 300 and an FMB 302 capable of operating at high speeds.

The technical paper "A Real-Time Video Signal Processor Suitable for Motion Picture Coding Applications" by Tamitani et al., published in IEEE Transactions on Circuits and Systems, Vol. 6, no. 10, October 1989, New York, USA, pages 1259-1265, discloses a real time video signal processor comprising several multiprocessor clusters, each of which has a plurality of video signal processor modules. In a cluster process a respective subimage is assigned to each module by using an overlap technique in which an image is divided into overlapping subimages. This technique permits each module to process respective subimage data independently of other modules. A separate memory controller is required for each video signal processor.

One method which has been proposed for reducing the processing time uses a multistage motion vector detection algorithm that reduces the number of operations (see, "Motion Compensating Inter-frame Coding for Teleconference TV Signals," Koyasu et al; Shingaku-Giho, IE81-54, pages 85 to 90, 1981). As an example; the above-mentioned full search operation needs to be performed 65,536 times on 256 x 256 pixels. Where a three-stage motion vector detection algorithm is applied, the operation count drops to 6,912. However, in a set-up where the frame memory is implemented using a DRAM whose access speed is about 50 ns, it takes as long as 345 µs to perform the memory access process involved. This means that high-speed processing is still required.

This bottleneck is associated with the frame memory structure. One way to circumvent this difficulty is to set up a plurality of frame memory arrangements. As shown in Figure 8, two or four frame memory arrangements may be provided for parallel processing. In Figure 8, frame memories (FM1A and FM2A) 304 and 308 store the same motion images of the current frame, while frame memories (FM1B and FM2B) 306 and 310 store the same motion images of the preceding frame. An upper-stage motion vector detection processor (MEP1) 202 detects a motion vector of the upper half of a picture, while a lower-stage motion vector detection processor (MEP2) 204 detects a motion vector of the lower half of the picture. So that motion vector detection may be performed continuously in the divided area of the picture centre, the frame memories 304, 306, 308 and 310 store all images; and the two motion vector detection processors 202 and 204 also detect a motion vector of an overlap area centring on the divided picture area.

However, in the set-up of Figure 8, each of the frame memories requires a memory capacity equivalent to the motion image data of one picture, for example, 524,288 bits (=256 x 256 x 8). Overall, a frame memory capacity for accommodating four pictures of image data needs to be provided.

If the system is further multiplexed in construction, the above-described memory and processor set-ups and their related parts must be expanded accordingly.

According to the present invention, there is provided a motion image difference detecting apparatus comprising:
first memory means for storing first data of a motion image signal corresponding to a first predetermined area obtained by dividing said motion image signal;
second memory means for storing second data of said motion image signal corresponding to a second predetermined area obtained by so dividing said motion image signal, an overlap area of said motion image signal where said first and second areas meet being stored in each of said memory means, said two memory means being independent of each other; and
a memory controller for controlling each of said memory means, so as to store into each memory the image signal of said overlap area and second areas meet;
characterised by detecting means connected to said memory means for detecting a difference between the present frame image and the preceding frame image independently for each predetermined area of the image in the form of block units for processing said motion image signal stored in each of said memory means; and in that said memory controller comprises:
a counter for generating a sequence of write address signals;
a subtractor for receiving said write address signals and subtracting an offset value therefrom to generate offset write address signals;
a first masking circuit for generating first write enable signals for controlling said first memory means during a first period, said first masking circuit being controlled by a first masking signal;
a second masking circuit for generating a second write enable signal for controlling said second memory means during a second period, said second masking circuit being controlled by a second masking signal;
wherein said first memory means stores data of said motion image signal at addresses specified by said write address signals during said first period, said second memory means stores data of said motion image signal at addresses specified by said offset write address signals during said second period and said first period and said second period overlap for an overlap period corresponding to said overlap area during which data of said motion image signal is written to both said first memory means and said second memory means.

Embodiments of the invention can permit higher speed processing without a requirement for excessive frame memory capacity.

The invention will now be described by way of example with reference to the accompanying drawings. throughout which like parts are referred to by like references, and in which:
Figure 1 is a block diagram of an embodiment of motion image difference detecting apparatus according to the present invention;
Figure 2 is a view showing how a motion image signal is divided and stored in the embodiment of Figure 1;
Figure 3 is a view showing another way of dividing the motion image signal and storing the divided signal;
Figure 4 is a block diagram of a modified embodiment of motion vector detecting apparatus;
Figure 5 is a timing chart for the apparatus of Figure 4;
Figure 6 is a block diagram of a known motion vector detecting apparatus;
Figure 7 is a view showing how a motion image difference is detected with the known apparatus; and
Figure 8 is a block diagram of another known motion vector detecting apparatus.

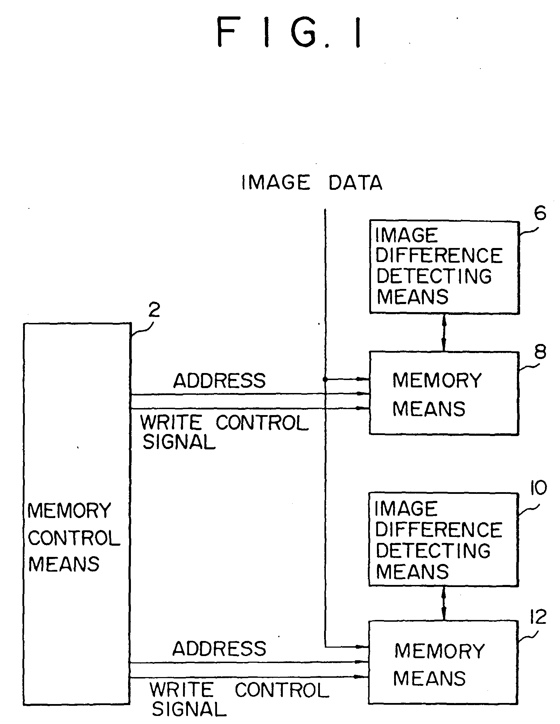

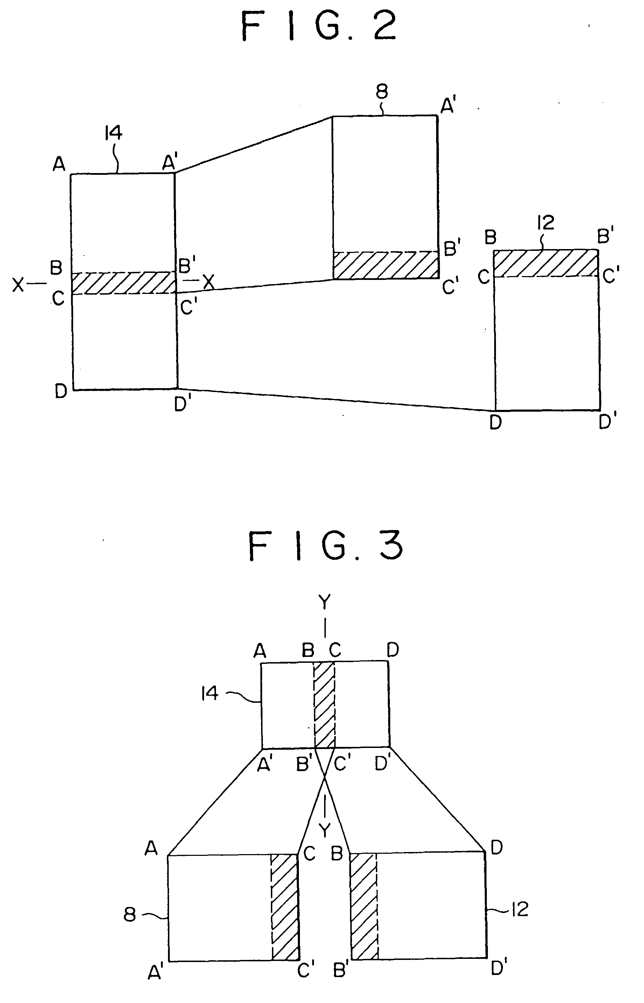

Figure 2 shows how one picture of a motion image is constructed and how the image data are divided for storage into two memory means 8 and 12 shown in Figure 1. The motion image of the picture 14 is divided into an upper and a lower portion centring on line X-X in the middle of the picture. The first memory means 8 stores motion image data of the area ranging from line A-A' to line C-C', the latter line being below the centre line X-X. The second memory means 12 stores motion image data of the area ranging from line B-B' to line D-D', the former line being above the centre line X-X. That is, the first memory means 8 and the second memory means 12 accommodate, in addition to half of the single picture motion image data each, the motion image data representing the overlap area enclosed by lines B-B' and C-C'. The overlap area image data are stored in both memory means 8 and 12, so that a first motion image difference detecting means 6 and a second motion image difference detecting means 10 may each detect independently the image difference continuously near the picture-dividing centre line X-X. The overlap data to be stored represent the width of a motion image detection unit block.

A memory control means 2 stores the image data of the picture 14 in the first and second memory means 8 and 12 in the format illustrated in Figure 2. The image difference detecting means 6 and 10, acting independently of each other, detect image changes between the current and the preceding picture in units of motion image detection unit blocks in the upper and lower portions of the picture including the overlap area.

As an alternative to being divided into the upper and lower portions as shown in Figure 2, the picture 14 may be divided into left and right-hand portions as shown in Figure 3. The picture, if its pixels are not square in shape, should preferably be divided in such a way that the capacity of each memory means will be minimized.

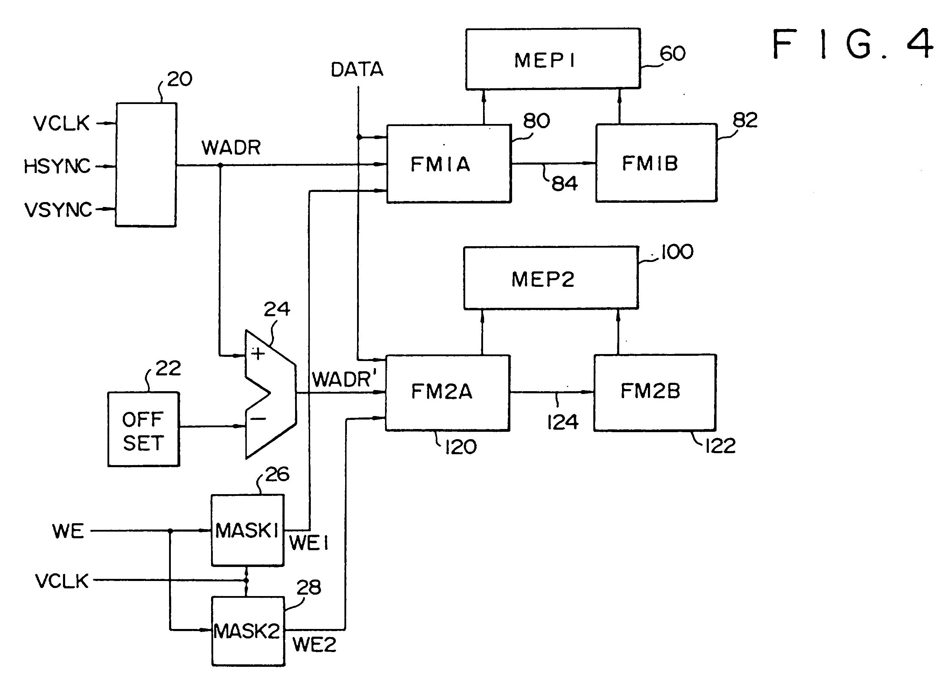

Figure 4 shows a modified form of the embodiment of Figure 1.

Referring to Figure 4, a counter 20, an offset register 22, a subtracter 24, a first masking circuit 26 and a second masking circuit 28 form the memory control means 2 of Figure 1; a first motion vector detecting processor (MEP1) 60 corresponds to the first motion image difference detecting means 6 of Figure 1; a first frame memory (FM1A) 80 for storing the current frame motion image signal, a memory bus 84 and a first frame memory (FM1B) 82 for storing the preceding frame motion image signal form the first memory means 8 of Figure 1; a second motion vector detecting processor (MEP2) 100 corresponds to the second motion image difference detecting means 10 of Figure 1; and a second frame memory (FM2A) 120 for storing the current frame motion image signal, a memory bus 124 and a second frame memory (FM2B) 122 for storing the preceding frame motion image signal form the second memory means of Figure 1.

With the above embodiment, the picture is divided in the direction depicted in Figure 2. One screen is made of 256 x 256 pixels, each pixel being represented by eight bits of luminance data. The current motion image detection unit block 500 (Figure 7) and the preceding motion image detection unit block 502 each measure 16 x 16 pixels. Therefore the capacity of each of the frame memories 80, 82, 120 and 122 is (128 x 256 + 256 x 16) x 8 bits = 36,864 x 8 bits = 294,912 bits (that is, 36,864 bytes). The overlap area measures 256 x 16 x 8 bits = 4,096 x 8 bits = 32,768 bits (that is, 4,096 bytes). In other words, each of the frame memories 80, 82, 120 and 122 corresponds in capacity to half of the data for one normal picture (256 x 256 x 8 bits = 524,288 bits) plus the data in the overlap area.

The frame memories 80 and 120 each comprise a dual port type DRAM which makes it possible simultaneously to move image data from the memory control means 2 thereto and to the MEP1 60 and the MEP2 100 therefrom. The frame memories 82 and 122 also each comprise a dual port type DRAM making it possible simultaneously to move image data from the frame memories 80 and 120 thereto and to the MEP1 60 and the MEP2 100 therefrom.

Referring also to Figure 2, the FM1A 80 stores the image data of the area enclosed by lines A-A' and C-C' in the picture 14, the area ranging from address 0 to address 36,863. The FM2A 120 stores the image data of the area enclosed by lines B-B' and D-D' in the picture 14, the area ranging from address 28,672 to address 65,535.

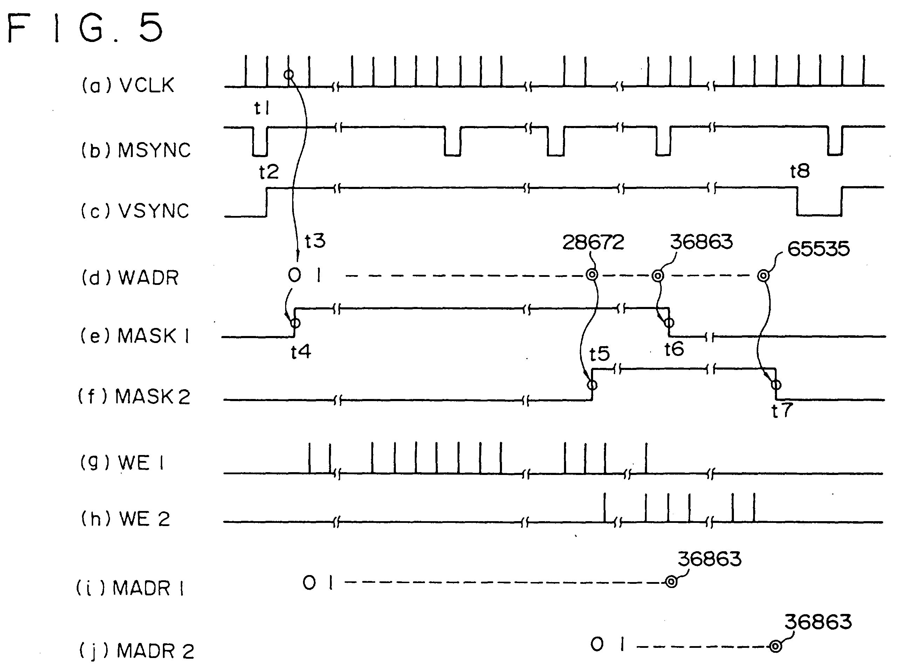

The operation of the embodiment of Figure 4 will now be described with reference to the timing chart of Figure 5. With this embodiment, image data are written into and read from each of the frame memories 80, 82, 120 and 122 in units of pixels (that is, 8 bits or 1 byte).

The counter 20 receives a television picture horizontal synchronizing signal MSYNC (Figure 5(b)), a television picture vertical synchronizing signal VSYNC (Figure 5(c)), and a clock signal VCLK (Figure 5(a)). The counter 20 receives the clock signal VCLK through a clock terminal, and the vertical synchronizing signal VSYNC through a reset terminal. Every time a vertical synchronizing signal VSYNC is input, the count value is reset in the counter 20; and every time a clock signal VCLK is input, the count value is incremented. The count value represents a write address WADR (covering addresses 0 to 65,535; Figure 5(d)) for the image data of the picture 14.

The write address WADR is directly sent to the FM1A 80 and turned into a memory address MADR1 (Figure 5(i)) for the FM1A 80. The write address WADR is also fed to the subtracter 24 through one terminal thereof. The other terminal of the subtracter 24 is supplied with an offset value (= 28,672) from the offset register 22. The subtracter 24 subtracts the offset value from the write address WADR and supplies the resulting write address WADR' to the FM2A 120. The write address WADR' from the subtracter 24 becomes a memory address MADR2 (Figure 5(j)) for the FM2A 120.

To enable the above write addresses WADR and WADR' for a predetermined period of time, the first masking circuit 26 and the second masking circuit 28 generate a masked first write enable signal WE1 (Figure 5(g)) and a masked second write enable signal WE2 (Figure 5(h)), respectively. The first masking circuit 26 receives a write enable signal WE. Except when the clock signal VCLK representing addresses 1 to 36,863 is applied following the receipt of a vertical synchronizing signal VSYNC (over time t2), the first masking circuit 26 uses a first masking signal MASK1 (Figure 5(e)) to mask the write enable signal WE. This allows the first masking circuit 26 to output the first write enable signal WE1 to the FM1A 80. Likewise, except when the clock signal VCLK representing addresses 32,767 to 655,351 is applied following the receipt of a vertical synchronizing signal VSYNC (over time t5 to t7), the second masking circuit 28 uses a second masking signal MASK2 (Figure 5(f)) to mask the write enable signal WE. This allows the second masking circuit 28 to output the second write enable signal WE2 to the FM2A 120.

The FM1A 80 and the FM2A 120 receive the same image data (DATA in Figure 4). Over the time t4 to t6, the first memory address MADR1 (0 to 36,863) causes the FM1A 80 to store the image data of addresses 0 to 36,863 representing the area enclosed by lines A-A' and C-C' in the picture 14 of Figure 2. On the other hand, over the time t5 to t7, the second memory address MADR2 (0 to 36,863) causes the FM2A 120 to store the image data of addresses 28,672 to 65,535 representing the area enclosed by lines B-B' and D-D' in the picture of Figure 2. Over the time t5 to t6, each frame memory stores the image data of the addresses representing the area enclosed by lines B-B' and C-C' in Figure 2. Since the partially overlapping image data between lines B-B' and C-C' are stored in the FM1A 80 and FM2A 120, the continuity of the image difference detection process is ensured. In this manner, the motion vector detection process is performed in units of motion image detection unit blocks independently and in parallel.

Given the image data from the FM1A 80 and FM1B 82, the MEP1 60 successively detects changes in the motion images M1 and M2 in units corresponding to the current motion image detection unit block 500 and the preceding motion image detection unit block 502 (16 x 16 pixels each, shown in Figure 7). The changes that may be detected are those in terms of image shift and gradation (luminance). If any change is detected by the MEP1 60, the coordinates of the detection centre Ca as well as the amount, direction and gradation difference of the change are represented in terms of a motion vector. Likewise, given the image data from the FM2A 120 and the FM2B 122, the MEP2 100 successively detects a motion vector in units of blocks concurrently with the MEP1 60. The MEP1 60 and the MEP2 100 each comprise a microprocessor or a DSP.

In the manner described, only the motion vector detected by the MEP1 60 and the MEP2 100 is coded in the normal way and transmitted to the receiving side.

The above-described process is repeated every time the image data of one frame is updated, for example, every 30 ms. When this process has been completed, the image data in the FM1A 80 are transferred via the second memory bus 84 to the FM1B 82. Likewise, the image data in the FM2A 120 are transferred via the memory bus 124 to the FM2B 122.

As described, the embodiment has the MEP1 60 and the MEP2 100 incorporated in parallel. Operating simultaneously, the two processors perform the task of detecting the motion image difference in the same picture. This arrangement doubles the speed of detecting the motion vector while making the total capacity of the frame memories 80, 82, 120 and 122 approximately equivalent to the image data of two pictures. Because the image data are divided for processing, image changes may be detected under time constraints of, say, 30 ms per frame without the use of a high-speed MEP1 60 or MEP2 100 or a high-speed frame memory 80, 82, 120, 122.

If the motion vector detecting system and the frame memory set-up are further multiplexed, for example, formed by four memory and processor arrangements, then the motion vector detection speed is quadrupled, but the total capacity of the frame memories remains substantially the same as that of the above embodiment, that is, equivalent to the image data of two pictures. That is, further multiplexing the system only increases the image data of the overlap area in the picture; the total capacity of the frame memories required stays approximately equivalent to the image data of two pictures.

The above embodiment, primarily associated with the detection of motion vectors, is not limitative of the present invention. The invention may also be applied to detecting simple image changes. Furthermore, the invention is not limited to teleconference system applications; it may also be applied to other systems for detecting changes between various images.

As described above, there is provided a motion image difference detecting system which divides a picture while maintaining the continuity thereof, and which stores the corresponding image data of the divided areas into frame memories with little increase in frame memory capacity, wherein image changes are processed in parallel by multiple frame and processor arrangements. This system permits high-speed detection of motion image differences without the use of a high-speed processor of frame memory set-up or a large-capacity frame memory arrangement, hence with no appreciable increase in manufacturing cost.

## Claims

1. A motion image difference detecting apparatus comprising:
first memory means (80) for storing first data of a motion image signal corresponding to a first predetermined area obtained by dividing said motion image signal;
second memory means (120) for storing second data of said motion image signal corresponding to a second predetermined area obtained by so dividing said motion image signal, an overlap area of said motion image signal where said first and second areas meet being stored in each of said memory means (80, 120), said two memory (80, 120) means being independent of each other; and
a memory controller (2) for controlling each of said memory means (80, 120), so as to store into each memory the image signal of said overlap area;
characterised by detecting means (60, 100) connected to said memory means (80, 120) for detecting a difference between the present frame image and the preceding frame image independently for each predetermined area of the image in the form of block units for processing said motion image signal stored in each of said memory means (80, 120); and in that said memory controller (2) comprises:
a counter (20) for generating a sequence of write address signals (WADR);
a subtractor (24) for receiving said write address signals and subtracting an offset value therefrom to generate offset write address signals (WADR');
a first masking circuit (26) for generating first write enable signals (WE1) for controlling said first memory (80) means during a first period (t4-t6), said first masking circuit being controlled by a first masking signal (MASK1);
a second masking circuit (28) for generating a second write enable signal (WE2) for controlling said second memory means (120) during a second period (t5-t7), said second masking circuit being controlled by a second masking signal (MASK2);
wherein said first memory means (80) stores data of said motion image signal at addresses specified by said write address signals (WADR) during said first period (t4-t6), said second memory means (120) stores data of said motion image signal at addresses specified by said offset write address signals (WADR') during said second period (t5-t7) and said first period (t4-t6) and said second period (t5-t7) overlap for an overlap period period (t5-t6) corresponding to said overlap area during which data of said motion image signal is written to both said first memory means (80) and said second memory means (120).

2. Apparatus according to claim 1 wherein said detecting means (60, 100) detects a motion condition of said motion image signal based on a block matching method using a searching area in the image to derive a motion vector.

3. Apparatus according to claim 2 wherein said motion image signal is searched by said detecting means (60, 100) based on said block unit.

4. Apparatus according to claim 1, claim 2 or claim 3 wherein said overlap area has the width of said block unit.

5. Apparatus according to any one of the preceding claims comprising further memory means to enable said motion image signal to be divided into more than two predetermined areas with respective overlap areas where said areas meet.

## Patentansprüche

1. Vorrichtung zur Detektierung von Bewegtbilddifferenzen
mit einer ersten Speichereinrichtung (80) zum Speichern von ersten Daten eines Bewegtbildsignals, die einem ersten vorbestimmten Bereich entsprechen, der durch Teilen des Bewegtbildsignals erhalten wird,
mit einer zweiten Speichereinrichtung (120) zum Speichern von zweiten Daten des Bewegtbildsignals, die einem zweiten vorbestimmten Bereich entsprechen, der durch dieses Teilen des Bewegtbildsignals erhalten wird, wobei in jeder der Speichereinrichtungen (80, 120) ein Überlappungsbereich des Bewegtbildsignals, in dem der erste und der zweite Bereich zusammentreffen, gespeichert wird und wobei die beiden Speichereinrichtungen (80, 120) voneinander unabhängig sind,
sowie mit einer Speichersteuereinrichtung zur Steuerung der einzelnen Speichereinrichtungen (80, 120) in der Weise, daß das Bildsignal des Überlappungsbereich in jeder Speichereinrichtung gespeichert wird,
**gekennzeichnet durch**
eine mit den Speichereinrichtungen (80, 120) verbundene Detektoreinrichtung (60, 100) zum Detektieren der Differenz zwischen dem laufenden Vollbild und dem vorangehenden Vollbild unabhängig für jeden der vorbestimmten Bereiche des Bildes in der Form von Blockeinheiten zur Verarbeitung des in jeder der Speichereinrichtungen (80, 120) gespeicherten Bewegtbildsignals,
sowie **dadurch gekennzeichnet**,
daß die Speichersteuereinrichtung (2) aufweist:
einen Zähler (20) zur Erzeugung einer Folge von Schreibadressensignalen (WADR),
einen Subtrahierer (24), der die Schreibadressensignale aufnimmt und von ihnen einen Offsetwert subtrahiert, um Offset-Schreibadressensignale (WADR') zu erzeugen,
eine von einem ersten Maskiersignal (MASK1) gesteuerte erste Maskierschaltung (26) für die Erzeugung von ersten Schreibaktivierungssignalen (WE1) zur Steuerung der ersten Speichereinrichtung (80) während einer ersten Periode (t4-t6),
eine von einem zweiten Maskiersignal (MASK2) gesteuerte zweite Maskierschaltung (28) für die Erzeugung von zweiten Schreibaktivierungssignalen(WE2) zur Steuerung der zweiten Speichereinrichtung (120) während einer zweiten Periode (t5-t7),
wobei die erste Speichereinrichtung (80) während der genannten ersten Periode (t4-t6) Daten des Bewegtbildsignal an Adressen speichert, die durch die Schreibadressensignale (WADR) spezifiziert sind, die zweite Speichereinrichtung (120) während der genannten zweiten Periode (t5-t7) Daten des Bewegtbildsignal an Adressen speichert, die durch die Offset-Schreibadressensignale (WADR') spezifiziert sind, und wobei die erste Periode (t4-t6) und die zweite Periode (t5-t7) in einer Überlappungsperiode (t5-t6) einander überlappen, die dem genannten Überlappungsbereich entspricht und in der Daten des Bewegtbildsignals sowohl in die erste Speichereinrichtung (80) als auch in die zweite Speichereinrichtung (120) eingeschrieben werden.

2. Vorrichtung nach Anspruch 1, bei der die Detektoreinrichtung (60, 100) den Bewegungszustand des Bewegtbildsignals auf der Basis eines Blockausgleichsverfahrens (Block-Matching) detektiert, bei dem ein Suchbereich in dem Bild zur Ableitung eines Bewegungsvektors benutzt wird.

3. Vorrichtung nach Anspruch 2, bei der das Bewegtbildsignal von der Detektoreinrichtung (60, 100) auf der Basis der genannten Blockeinheit gesucht wird.

4. Vorrichtung nach Anspruch 1, 2 oder 3, bei der der Überlappungsbereich die Breite der Blockeinheit hat.

5. Vorrichtung nach einem der vorhergehenden Ansprüche mit weiteren Speichereinrichtungen, die eine Teilung des Bewegtbildsignals in mehr als zwei vorbestimmte Bereiche ermöglichen mit entsprechenden Überlappungsbereichen, in denen die genannten Bereiche zusammentreffen.

## Revendications

1. Appareil de détection de différence d'image de déplacement comprenant :
un premier moyen de mémoire (80) pour stocker des premières données d'un signal d'image de déplacement correspondant à une première zone prédéterminée obtenues en divisant ledit signal d'image de déplacement ;
un second moyen de mémoire (120) pour stocker des secondes données dudit signal d'image de déplacement correspondant à une seconde zone prédéterminée obtenues en divisant pareillement ledit signal d'image de déplacement, une zone en chevauchement dudit signal d'image de déplacement où lesdites première et seconde zones se rencontrent étant stockée dans chacun desdits moyens de mémoire (80, 120), lesdits deux moyens de mémoire (80, 120) étant indépendants l'un de l'autre ; et
un contrôleur de mémoire (2) pour commander chacun desdits moyens de mémoire (80, 120) de manière à stocker dans chaque mémoire le signal d'image de ladite zone en chevauchement,
caractérisé par un moyen de détection (60, 100) connecté auxdits moyens de mémoire (80, 120) pour détecter une différence entre l'image de trame courante et l'image de trame précédente indépendamment de chaque zone prédéterminée de l'image sous la forme d'unités de blocs pour traiter ledit signal d'image de déplacement stocké dans chacun desdits moyens de mémoire (80, 120) ;
et en ce que ledit contrôleur de mémoire (2) comprend :
un compteur (20) pour générer une séquence de signaux d'adresse d'écriture (WADR) ;
un soustracteur (24) pour recevoir lesdits signaux d'adresse d'écriture et pour en soustraire une valeur de décalage afin de générer des signaux d'adresse d'écriture de décalage (WADR') ;
un premier circuit de masquage (26) pour générer des premiers signaux de validation d'écriture (WE1) pour commander ledit premier moyen de mémoire (80) pendant une première période (t4-t6), ledit premier circuit de masquage étant commandé par un premier signal de masquage (MASK1) ;
un second circuit de masquage (28) pour générer un second signal de validation d'écriture (WE2) pour commander ledit second moyen de mémoire (120) pendant une seconde période (t5-t7), ledit second circuit de masquage étant commandé par un second signal de masquage (MASK2),
dans lequel ledit premier moyen de mémoire (80) stocke des données dudit signal d'image de déplacement en des adresses spécifiées par lesdits signaux d'adresse d'écriture (WADR) pendant ladite première période (t4-t6), ledit second moyen de mémoire (120) stocke des données dudit signal d'image de déplacement en des adresses spécifiées par lesdits signaux d'adresse d'écriture de décalage (WADR') pendant ladite seconde période (t5-t7), et ladite première période (t4-t6) et ladite seconde période (t5-t7) se chevauchent pendant une période en chevauchement (t5-t6) correspondant à ladite zone en chevauchement pendant laquelle des données dudit signal d'image de déplacement sont écrites à la fois dans ledit premier moyen de mémoire (80) et dans ledit second moyen de mémoire (120).

2. Appareil selon la revendication 1, dans lequel ledit moyen de détection (60, 100) détecte une condition de déplacement dudit signal d'image de déplacement sur la base d'un procédé d'adaptation de blocs utilisant une zone de recherche dans l'image pour dériver un vecteur de déplacement.

3. Appareil selon la revendication 2, dans lequel ledit signal d'image de déplacement est recherché par ledit moyen de détection (60, 100) sur la base de ladite unité de blocs.

4. Appareil selon la revendication 1, 2 ou 3, dans lequel ladite zone en chevauchement présente la largeur de ladite unité de blocs.

5. Appareil selon l'une quelconque des revendications précédentes, comprenant un moyen de mémoire supplémentaire pour permettre la division dudit signal d'image de déplacement en plus de deux zones prédéterminées, des zones en chevauchement respectives étant définies où lesdites zones se rencontrent.
